(19)

Europäisches
Patentamt

European
Patent Office

Office européen
des brevets

(11) **EP 3 444 938 B1**

(12) **EUROPÄISCHE PATENTSCHRIFT**

(45) Veröffentlichungstag und Bekanntmachung des
Hinweises auf die Patenterteilung:
**18.11.2020   Patentblatt 2020/47**

(51) Int Cl.:
*F03D 7/02* (2006.01)          *H02J 3/38* (2006.01)
*H02P 9/02* (2006.01)

(21) Anmeldenummer: **17186837.5**

(22) Anmeldetag: **18.08.2017**

(54) **VERFAHREN ZUR STEUERUNG EINER WINDENERGIEANLAGE**

METHOD FOR CONTROLLING A WIND TURBINE

PROCÉDÉ DE COMMANDE D'UNE ÉOLIENNE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**20.02.2019   Patentblatt 2019/08**

(73) Patentinhaber: **Nordex Energy GmbH
22419 Hamburg (DE)**

(72) Erfinder:
• **De Rijcke, Simon
22419 Hamburg (DE)**
• **Hamann, Niels
22297 Hamburg (DE)**
• **Wessels, Christian
20357 Hamburg (DE)**

(74) Vertreter: **Hauck Patentanwaltspartnerschaft
mbB
Postfach 11 31 53
20431 Hamburg (DE)**

(56) Entgegenhaltungen:
**DE-A1-102009 014 012     DE-A1-102012 224 067
DE-A1-102015 208 554**

EP 3 444 938 B1

**Beschreibung**

Die vorliegende Erfindung betrifft ein Verfahren zur Steuerung einer Windenergieanlage, bei dem eine in ein elektrisches Versorgungsnetz eingespeiste elektrische Leistung in einem Boost-Betrieb über eine generatorische Verzögerung des Generators erhöht ist.

Die vorliegende Erfindung betrifft die Steuerung der Windenergieanlage für eine als "Virtual Inertia" bezeichnete Betriebsweise. Dabei wird aus Gründen der Netzstützung kurzfristig eine überhöhte Leistung, insbesondere Wirkleistung, in das elektrische Versorgungsnetz eingespeist. Die Windenergieanlage emuliert dabei eine Unterfrequenzantwort von konventionellen Synchrongeneratoren. Aus Sicht der Energiebilanz wird für die Einspeisung des überhöhten Leistungswertes die in der drehenden Masse der Windenergieanlage gespeicherte Rotationsenergie über den Generator kurzfristig und kurzzeitig in elektrische Leistung umgewandelt und in das elektrische Versorgungsnetz eingespeist. Dieser Vorgang führt dazu, dass in einem Boost-Betrieb mehr elektrische Leistung in das Versorgungsnetz eingespeist wird als an mechanischer Leistung aus dem Wind aufgenommen wird und kurzfristig aufgenommen werden kann. Dies führt zu einer Abnahme der Drehzahl und, damit verbunden, der gespeicherten Rotationsenergie. Am Ende der Boost-Phase befindet sich die Windenergieanlage bezogen auf Drehzahl und Drehmoment in einem Betriebspunkt, der nicht für den Dauerbetrieb vorgesehen ist. In einer Wiederherstellungsphase wird die Windenergieanlage dann wieder in einen Betriebspunkt überführt, in dem Drehzahl und Drehmoment in einem vorbestimmten, für die Aufnahme von Leistung aus dem Wind optimalen Verhältnis stehen und die Windenergieanlage dauerhaft betrieben werden kann. Verfahren und Vorgehensweise für Virtual Inertia sind steuerungstechnisch schwierig durchzuführen.

Aus EP 2 532 888 A1 ist eine Steuerungsanordnung für einen Virtual Inertia-Betrieb an einer Windenergieanlage bekannt, bei dem über einen Zweipunkt-Controller (bang-bang Controller) die Leistungserzeugung mit einer zusätzlich erhöhten Leistung erfolgt.

Aus DE 10 2015 208 554 A1 ist ein Verfahren zum Betrieb einer Windenergieanlage bekannt, wobei nach einem ersten Betriebszustand, einer ersten Leistungsabgabe und einer ersten Drehzahl in einen zweiten Betriebszustand mit einer zweiten Leistungsabgabe und einer zweiten Drehzahl gesteuert wird. Zum Steuern in den zweiten Betriebszustand wird die zum Einspeisen verfügbare aerodynamische Leistung bestimmt, die die einzustellende Soll-Drehzahl vorgibt.

Aus DE 10 2012 224 067 A1 ist ein Verfahren zum Regeln des elektrischen Moments einer Windenergieanlage bei einem Netzfehler bekannt geworden. Es wird, ansprechend auf einen Spannungsabfall ein Momentenregler aktiviert, der ein Ziel für das elektrische Moment der Windenergieanlage ermittelt. Eine Momentenrampe wird initialisiert und der Zielwert des Momentenreglers mit dem der Momentenrampe verglichen und der kleinere wird als Momentensollwert ausgewählt.

Aus DE 2009 014 012 A1 ist ein Verfahren zum Betrieb einer Windenergieanlage bekannt, bei dem die vom Generator der Windenergieanlage an das Netz abgegebene Leistung kurzfristig und für einen kurzen Zeitraum über die aktuelle Leistung der Windenergieanlage angehoben wird, wenn die Netzfrequenz des elektrischen Netzes um einen vorbestimmten Frequenzwert unterhalb der gewünschten Soll-Frequenz des Netzes liegt.

Der Erfindung liegt die Aufgabe zugrunde, ein Verfahren zum Betrieb einer Windenergieanlage bereitzustellen, das mit einfachen Mitteln eine zuverlässige Steuerung des Betriebs während und nach einem Bereitstellen einer erhöhten elektrischen Leistung gestattet.

Erfindungsgemäß wird die Aufgabe durch ein Verfahren mit den Merkmalen aus Patentanspruch 1 gelöst. Vorteilhafte Ausgestaltungen bilden die Gegenstände der Unteransprüche.

Das erfindungsgemäße Verfahren dient zur Steuerung einer Windenergieanlage. Das Verfahren ist für einen Boost-Betrieb vorgesehen, in dem eine in ein elektrisches Versorgungsnetz eingespeiste elektrische Leistung über eine generatorische Verzögerung des Generators erhöht wird. Im Boost-Betrieb wird eine überhöhte Leistung in das elektrische Versorgungsnetz eingespeist, die aus einer generatorischen Verzögerung der Windenergieanlage stammt. Durch die generatorische Verzögerung wird die in den drehenden Teilen gespeicherte Rotationsenergie in elektrische Leistung gewandelt. Das Betriebsverfahren sieht vor, dass abhängig von einem Istwert einer Drehzahl ein Sollwert für ein Generatormoment ermittelt wird. Hierbei handelt es sich um eine drehzahlabhängige Momentensteuerung. Bei dem Verfahren wird der ermittelte Sollwert für das Generatormoment über einen Begrenzer mit vorgebbarer oberer und unterer Grenze an einen Umrichter und seine ihm zugeordnete Umrichtersteuerung angelegt. Im regulären Betrieb ist der Begrenzer für den Sollwert des Generatormoments vorgesehen, damit nicht zu große oder zu kleine Sollwerte für das Generatormoment versehentlich mit Hilfe des Umrichters angesteuert werden. Tritt bei dem erfindungsgemäßen Verfahren ein Boost-Signal auf, so wird in einem Boost-Betrieb eine erhöhte elektrische Leistung in das Versorgungsnetz eingespeist. Ein Boost-Signal muss nicht notwendig in Form eines Flag-Bits vorliegen, sondern kann auch in der Überprüfung von Auslösebedingungen für einen Boost-Betrieb bestehen. Die eingespeiste elektrische Leistung ist gegenüber einem Istwert der vor dem Boost-Signal eingespeisten elektrischen Leistung erhöht. Auch kann erhöhte eingespeiste elektrische Leistung größer als der Leistungsnennwert der Windenergieanlage sein. Zur erhöhten Leistungseinspeisung wird ein Sollwert für das Generatormoment im Boost-Betrieb bestimmt, der zu der erhöhten Leistungseinspeisung führt. Erfindungsgemäß wird der berechnete Sollwert für das Generatormoment im Boost-Betrieb sowohl als obere Grenze als auch als untere Grenze an den Begrenzer angelegt. Der besondere Vorteil dieses Verfahrensschrittes besteht darin, dass auch bei dem Abrufen von Virtual Inertia und dem zugehörigen Boost-Betrieb weiterhin eine Drehzahlmomentensteuerung wie im Normalbetrieb arbeiten kann. Auch kann auf den bereits vorhandenen Begrenzer zurückgegriffen werden. Ebenso muss eine bereits vorhandene Drehzahl-/Drehmomentenregelung nicht verändert werden. Im Boost-Betrieb gibt der Begrenzer den Sollwert für das Generatormoment vor, in dem obere und untere Grenze des Begrenzers auf den Sollwert gesetzt werden. Ein weiterer besonderer Vorteil des erfindungsgemäßen Verfahrens ist darin zu sehen, dass der Wechsel in und aus dem Normalbetrieb bei laufender, drehzahlabhängiger Ermittlung des Sollwerts für das Generatormoment erfolgen muss, was durch Anpassen der oberen und unteren Grenze für den Begrenzer möglich ist.

Erfindungsgemäß wird das Boost-Signal erzeugt, wenn die Frequenz im elektrischen Versorgungsnetz unter einen ersten vorbestimmten Frequenzwert fällt. Bei dem frequenzabhängigen Umschalten in den Boost-Betrieb wird bevorzugt auf eine Unterfrequenz reagiert. Je nach Umsetzung des erfindungsgemäßen Verfahrens auf Ebene der einzelnen Windenergieanlage oder auf Ebene eines Windparks, kann auch die Frequenzmessung entweder direkt an der Windenergieanlage oder auf Parkebene, beispielsweise im Parknetz oder am Einspeisepunkt, erfolgen.

Erfindungsgemäß wird alternativ oder zusätzlich das Boost-Signal erzeugt, wenn eine zeitliche Änderung der Frequenz im elektrischen Versorgungsnetz einen vorbestimmten Gradientenwert übersteigt. Das Boost-Signal wird erzeugt, wenn der Frequenzgradient eine vorbestimmte Grenze übersteigt. Der Frequenzgradient ist definiert als eine Frequenzänderung $\Delta f$ während einer Zeitdauer $\Delta t$. Ein solcher gradientenabhängiger Auslösevorgang erlaubt eine schnellere Boost-Aktivierung, ansprechend auf einen Frequenzabfall im Vergleich zu einer Auslöseschwelle, die nur auf einen Frequenzwert abstellt. Wird auf eine Auslöseschwelle für die Frequenz abgestellt, die zu unterschreiten ist, so ist damit die Reaktion der Windenergieanlage verzögert, da abgewartet wird, bis der Frequenzwert unterschritten ist, selbst wenn aufgrund der Änderungsrate abzusehen ist, dass der entsprechende Schwellwert bald erreicht wird.

In einer bevorzugten Weiterbildung des Verfahrens kann auch eine Vielzahl von unterschiedlichen Gradientenwerten vorgesehen sein. Die unterschiedlichen Gradientenwerte $\Delta f/\Delta t$ sind dabei für unterschiedliche Zeitdauern $\Delta t$ gemessen. Beispielsweise kann über eine längere Zeitdauer $\Delta t_{long}$ oder eine kürzere Zeitdauer $\Delta t_{short}$ gemessen worden sein. Hierbei können die Gradientenwerte, die sich auf eine kürzere Zeitdauer beziehen, verwendet werden, um schneller auf eine Frequenzänderung zu reagieren, während auf Gradientenwerte, die sich auf eine längere Zeitdauer beziehen, anders, insbesondere nicht so dringend, reagiert wird.

In einer bevorzugten Ausgestaltung wird das Boost-Signal zurückgesetzt, wenn entweder eine vorbestimmte Zeitdauer $T_{boost}$ seit Auftreten des Boost-Signals verstrichen ist oder der Istwert der Frequenz im elektrischen Versorgungsnetz größer als ein zweiter vorbestimmter Frequenzwert ist, der wiederum größer als der erste vorbestimmte Frequenzwert ist. Der Boost-Betrieb mit der Einspeisung erhöhter elektrischer Leistung wird höchstens für eine vorbestimmte Zeitdauer aufrechterhalten. Die Zeitdauer ist beispielsweise vom Typ und Aufbau der Windenergieanlage abhängig und kann auch Vorgaben einer Einspeiserichtlinie berücksichtigen. Sollte während dieser Zeit die Frequenz im elektrischen Versorgungsnetz bereits wieder zurückkehren und den zweiten vorbestimmten Frequenzwert überschreiten, so kann der Boost-Betrieb vorzeitig durch Zurücksetzen des Boost-Signals beendet werden.

Der Betriebszustand der überhöhten Leistungseinspeisung hält an, solange das Boost-Signal gesetzt ist. Erst mit dem Zurücksetzen des Boost-Signals wird in einen weiteren Betriebszustand umgeschaltet. Das Zurücksetzen des Boost-Signals umfasst nicht notwendig, dass ein Signal aufgehoben oder ein Flag-Bit gelöscht wird, sondern kann auch als Beendigung einer ersten Betriebsphase des Boost-Betriebes allgemein charakterisiert werden. Neben der Rückkehr der Frequenz im elektrischen Versorgungsnetz können auch Bedingungen für ein vorzeitiges Beenden des Boost-Betriebs definiert werden, beispielsweise wie untere Grenzen für Drehzahl und eingespeiste Leistung.

In einer bevorzugten Ausgestaltung wird während des Boost-Betriebs aus einer elektrischen Leistung bei Auftreten des Boost-Signals und einer Boost-Leistung, abhängig von dem Istwert der Drehzahl, der Sollwert für das Generatormoment berechnet. Bei der Berechnung wird, ausgehend von der Leistung bei Auftreten des Boost-Signals, die Boost-Leistung hinzuaddiert und durch Division mit dem Istwert der Drehzahl ein dem Generatormoment proportionaler Wert berechnet. Der besondere Vorteil dieses Verfahrens ist, dass auf den aktuellen Wert der Drehzahl abgestellt wird und so eine Regelung der Windenergieanlage auch im Boost-Betrieb erfolgt.

In einer bevorzugten Ausgestaltung ist auch der Wert für die Boost-Leistung ein vorbestimmter Bruchteil der Nennleistung oder der Leistung bei Auftreten des Boost-Signals. Wird auf die Leistung bei Auftreten des Boost-Signals abgestellt, so ist der Wert für die Boost-Leistung bei einer Windenergieanlage, die viel Leistung bei Auftreten des Boost-Signals einspeist, größer als bei einer Windenergieanlage, die wenig Leistung bei Auftreten des Boost-Signals einspeist. Die Leistung kann bei Auftreten des Boost-Signals auch über eine vorbestimmte Zeitdauer gemittelt werden.

Auch ist es möglich, den Wert für die Boost-Leistung abhängig von der gemessenen Frequenz zu bestimmen. Eine solche Frequenzabhängigkeit erlaubt es, die Boost-Leistung durch die Netzfrequenz zu beeinflussen.

Neben der Abhängigkeit der Boost-Leistung von der Netzfrequenz ist es auch möglich, für die Boost-Leistung auf die Frequenzänderung pro Zeit, also den Gradientenwert in dem elektrischen Versorgungsnetz, abzustellen. Hier kann bevorzugt eine Form von Proportionalität angenommen werden. Demnach führt ein großer Gradientenwert, also ein starker Frequenzabfall in kurzer Zeit, zu einer größeren Boost-Leistung als ein kleiner Gradientenwert. Auch ist es möglich, die Boost-Leistung zu reduzieren, wenn die Frequenz einen stationären Zustand erreicht.

In einer bevorzugten Ausgestaltung des erfindungsgemäßen Verfahrens schließt sich an den Boost-Betrieb, nach einem Zurücksetzen des Boost-Signals, entweder ein Übergangsbetrieb oder ein Wiederherstellungsbetrieb an. Sowohl der Übergangsbetrieb, der durch ein Übergangssignal gekennzeichnet ist, als auch der Wiederherstellungsbetrieb, der durch das Wiederherstellungssignal gekennzeichnet ist, dienen dazu, nach abgeschlossenem Boost-Betrieb, die Windenergieanlage wieder in einen stabilen Betriebszustand für eine drehzahlabhängige Drehmomentsteuerung zurückzuführen. Am Ende des Boost-Betriebs befindet sich die Anlage in einem Zustand, bei dem für den Sollwert des Generatormoments eine zu niedrige Drehzahl vorliegt, so dass im Übergangsbetrieb und im Wiederherstellungsbetrieb die Drehzahl angehoben und die eingespeiste Leistung abgesenkt wird.

In einer bevorzugten Ausgestaltung der Erfindung wird bei Zurücksetzen des Boost-Signals, also wenn das Übergangs signal oder das Wiederherstellungssignal erzeugt wird, die obere und untere Grenze an dem Begrenzer auf vorbestimmte Werte aus einem Normalbetrieb der Windenergieanlage gesetzt und die zeitliche Änderung des Sollwerts für das Generatormoment über eine Rampenfunktion gesteuert. Im Gegensatz zu dem Boost-Betrieb, erfolgt die Vorgabe für den Sollwert des Generatormoments nicht über die entsprechend gesetzten Grenzen an dem Begrenzer, sondern die zeitliche Änderung des Sollwerts für das Generatormoment wird über eine Rampenfunktion gesteuert, insbesondere die zeitliche Änderung der unteren und oberen Grenze des Generatormoments wird gesteuert. Die Steuerung über die Rampenfunktion bewirkt, dass die maximal zulässige Änderung des Sollwerts für das Generatormoment begrenzt ist. Wie auch schon im Boost-Betrieb, erfolgt auch im Übergangs- oder Wiederherstellungsbetrieb die Begrenzung des Generatormoments über den Begrenzer für das Generatormoment, wobei bis zum Abschluss des Übergangs- oder Wiederherstellungsbetriebs die maximal zulässige Änderungsrate des Generatormoments über den Begrenzer geregelt ist.

In einer bevorzugten Ausgestaltung der Erfindung wechselt die Windenergieanlage nach dem Boost-Betrieb in den Wiederherstellungsbetrieb und bestimmt die maximal zulässige zeitliche Änderung des Sollwerts für das Generatormoment, abhängig von der zeitlichen Änderung der Drehzahl. Die zeitliche Änderung der Drehzahl, insbesondere eine steigende Drehzahl, ist ein Indiz dafür, dass die Windenergieanlage sich wieder einem stationären Betriebszustand nähert.

In einer weiteren Fortbildung des erfindungsgemäßen Verfahrens wird nach einem Boost-Betrieb in den Wiederherstellungsbetrieb geschaltet. In dem Wiederherstellungsbetrieb ist die maximal zulässige zeitliche Änderung des Sollwerts für das Generatormoment abhängig von der zeitlichen Änderung der Drehzahl. Die zeitliche Änderung der Drehzahl setzt sich zusammen aus der zeitlichen Änderung des Istwerts der Drehzahl und einem hierzu hinzuaddierten konstanten Wert. Die zeitliche Änderung der Drehzahl wird auf einen Regler aufgeschaltet, um einen Sollwert für das Generatormoment zu bestimmen. Als Regler kann hier ein Regler mit einem P-Glied oder einem PI-Glied oder ein PID-Regler vorgesehen sein. Bei der Verwendung eines Reglers mit einem P-Glied oder PI-Glied ist von Vorteil, dass durch das Weglassen eines D-Anteils starke Veränderungen des Sollwerts unterdrückt werden und der Triebstrang mit seinen Triebstrangelementen wie eine Welle oder eine Kupplung nicht zu stark belastet werden.

Die Parameter des P-Gliedes und/oder des PI-Gliedes können abhängig von einem Betriebszustand und/oder Typ der Windenergieanlage parametrisiert werden, wobei durch ein adaptives "gain-scheduling" der Aufwand für die Parametrisierung reduziert werden kann.

In einer alternativen Ausgestaltung ist ein Übergangsbereich zeitlich zwischen dem Boost-Betrieb und dem Wiederherstellungsbetrieb vorgesehen. In dem Übergangsbereich wird eine maximal zulässige zeitliche Änderung des Sollwerts für das Generatormoment auf einen konstanten Wert gesetzt. Dies bedeutet, dass die maximal zulässige zeitliche Änderung konstant ist. Auf diese Weise wird der Sollwert für das Generatormoment mit einer gleichbleibenden Änderungsrate angepasst.

In einer bevorzugten Weiterbildung des erfindungsgemäßen Verfahrens wird das Übergangssignal zurückgesetzt und das Wiederherstellungssignal gesetzt, wenn der Istwert der Drehzahl zunimmt und/oder die eingespeiste Leistung kleiner als die verfügbare Leistung ist. Die Zunahme des Istwerts der Drehzahl bedeutet, dass die Drehzahl steigt und die Windenergieanlage damit nach dem Boost-Betrieb in einen Betrieb zurückkehrt, in dem Drehzahl und eingespeiste Leistung einander entsprechen. Die Berücksichtigung der eingespeisten Leistung in Bezug auf die verfügbare Leistung bedeutet, dass die eingespeiste elektrische Leistung kleiner als die aus dem Wind bei dieser Drehzahl verfügbare Leistung ist. Durch diesen Ansatz wird sichergestellt, dass über die Zeit die nicht eingespeiste Leistung wieder als Rotationsenergie in der Windenergieanlage gespeichert wird.

In einer bevorzugten Ausgestaltung wird bei dem Wiederherstellungsbetrieb die maximale zeitliche Änderung des Sollwerts des Generatormoments abhängig von dem Istwert der Drehzahl und der verfügbaren Leistung bestimmt. Bevorzugt wird hierbei die verfügbare Leistung als die aktuell, d. h. abhängig von der Drehzahl und/oder der Windgeschwindigkeit bestimmt.

In einer alternativen Ausgestaltung wird die maximal zulässige zeitliche Änderung des Sollwerts des Generatormoments, abhängig von einem Istwert der eingespeisten Leistung, bei Auftreten des Wiederherstellungssignals und dem aktuellen Istwert der Drehzahl bestimmt. Das Abstellen auf den Istwert der eingespeisten Leistung bei Auftreten des Wiederherstellungssignals erlaubt der Windenergieanlage bei Beendigung des Wiederherstellungsbetriebs in den Betriebszustand zu einem früheren Zeitpunkt zurückzukehren.

In einem besonders bevorzugten Verfahren wird das Wiederherstellungssignal zurückgesetzt, wenn der Sollwert des Generatormoments innerhalb eines durch die obere Grenze und die untere Grenze des Begrenzers vorgegebenen Bereichs liegt, wobei der Begrenzer dann nicht mehr auf den Sollwert des Generatormoments wirkt.

Mit dem Zurücksetzen des Wiederherstellungssignals kehrt die Windenergieanlage in ihren regulären Betriebsmodus zurück, in dem drehzahlabhängig ein Sollwert für das Generatormoment vorgegeben wird und dieser Sollwert über den Begrenzer auf einen Bereich zwischen der oberen und der unteren Grenze begrenzt wird.

Ein bevorzugtes Ausführungsbeispiel der Erfindung wird nachfolgend anhand der Figuren näher erläutert. Es zeigen:

Fig. 1    in einer schematischen Ansicht eine zur Einspeisung in das elektrische Versorgungsnetz vorgesehene Windenergieanlage,

Fig. 2    eine schematische Ansicht einer Drehmomentregelung eines Umrichters,

Fig. 3    eine schematische Ansicht zur Bestimmung der oberen und unteren Grenze für den Begrenzer,

Fig. 4    eine schematische Ansicht zur Berechnung des Sollwerts für das Generatordrehmoment,

Fig. 5    die Berechnung der oberen und unteren Grenze während der Übergangsbetriebs oder des Wiederherstellungsbetriebs,

Fig. 6    den Vorgang zum Umschalten vom Übergangsbetrieb in den Wiederherstellungsbetrieb,

Fig. 7    vier Alternativen zum Betrieb der Windenergieanlage im Übergangs- und/oder Wiederherstellungsbetrieb und

Fig. 8    eine schematische Ansicht der Zeitentwicklung für Leistung, Generatormoment, Drehzahl und Netzfrequenz.

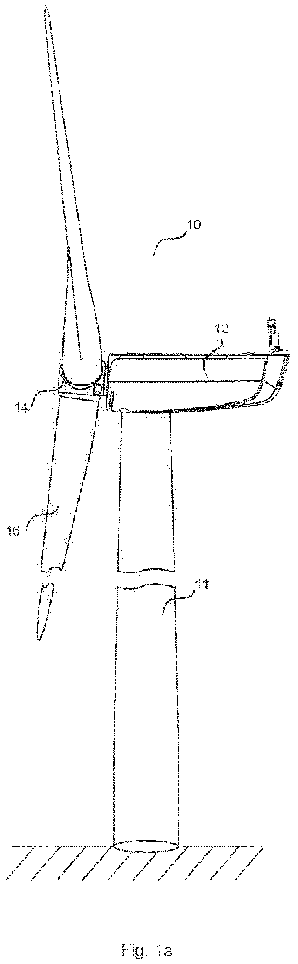

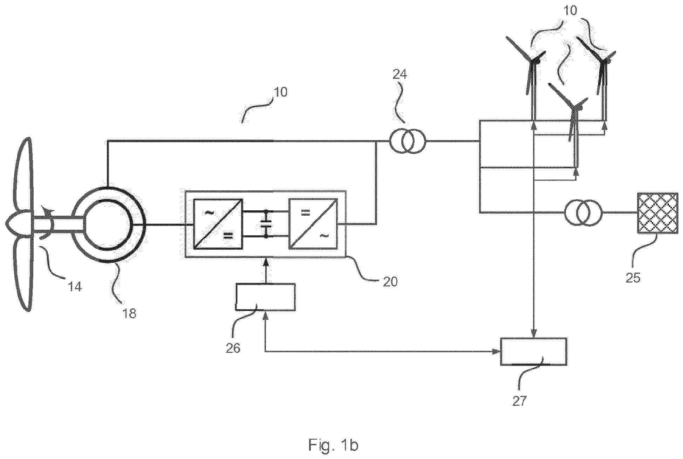

Fig. 1a zeigt in einer schematischen Ansicht eine Windenergieanlage 10 mit einem Turm 11, einer Gondel 12 und einem Rotor 14. Der Rotor trägt mehrere Rotorblätter 16, die Leistung aus dem Wind aufnehmen. Fig. 1b zeigt eine Ausgestaltung einer Windenergieanlage 10 mit einem doppeltgespeisten Asynchrongenerator 18, welcher rotorseitig über einen Umrichter 20 und statorseitig direkt, also ohne Zwischenschaltung eines Umrichters, mit einem elektrischen Übertragungsnetz 25 verbunden ist. Alternativ kann die Windenergieanlage auch mit einem Vollumrichter konfiguriert sein. Die Einspeisung in das elektrische Übertragungsnetz 25 erfolgt beispielsweise über einen Transformator 24. Die Windenergieanlage 10 kann Teil eines Windparks bestehend aus mehreren Windenergieanlagen 10 sein, die beispielsweise über ein Parknetz und einen Hochspannungstransformator mit dem elektrischen Übertragungsnetz 25 verbunden sind. Die Windenergieanlage 10 weist eine Regelung 26 auf, die mit dem Umrichter 20, bzw. dessen Regelung datenkommunikativ verbunden ist. Die Regelung 26 ist mit einer Windparkregelung 27, die zur Regelung mehrerer Windenergieanlagen 10 eingerichtet ist, datenkommunikativ verbunden. Das erfindungsgemäße Verfahren kann vorzugsweise in der Regelung 26 implementiert sein. Grundsätzlich ist die Erfindung auch auf Ebene des Windparks einsetzbar, indem jeder einzelnen Windenergieanlage 10 Sollwerte von dem Windparkregler 27 vorgegeben werden und eine Frequenz im Einspeisepunkt oder im Parknetz gemessen wird.

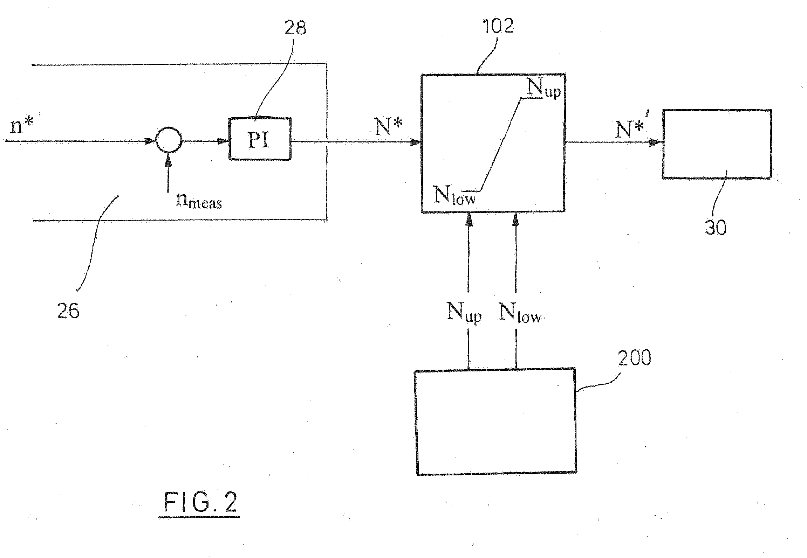

Fig. 2 zeigt in einer schematischen Ansicht eine Steuerung 26 für den Betrieb der Windenergieanlage. Über einen PI-Regler 28 wird aus einer Regeldifferenz, gebildet aus einem Drehzahlsollwert $n^*$ und einem Istwert der Drehzahl $n_{meas}$, ein Drehmomentsollwert $N^*$ für den Umrichter ermittelt. Der Drehmomentsollwert $N^*$ liegt an einem Begrenzer 102 an. Bei dem Begrenzer handelt es sich um einen Begrenzer mit einstellbarer unterer und oberer Grenze (Dynamic Limiter). Die untere Grenze $N_{low}$ und die obere Grenze $N_{up}$ werden durch eine Begrenzersteuerung 200 vorgegeben. Die Begrenzersteuerung 200 kann auch Verfahrensabläufe für das Bremsen der Windenergieanlage besitzen oder für andere Betriebsmodi Datensätze für die Vorgabe der unteren und oberen Grenzen aufweisen. Im vorliegenden Fall wird die Situation von Virtual Inertia und deren Verfahrensablauf diskutiert, bei dem Rotationsenergie aus dem drehenden Teil der Windenergieanlage unter Erhöhung der eingespeisten elektrischen Leistung entnommen wird. Der Begrenzer 102 begrenzt den anliegenden Drehmomentsollwert $N^*$ und stellt einen begrenzten Drehmomentsollwert $N^{*'}$ bereit. Der Ausgangswert $N^{*'}$ des Begrenzers 102 wird dazu verwendet, das Generatormoment der Windenergieanlage zu steuern. Die Steuerung des Generatormoments erfolgt je nach verwendetem Generator. Bei der vorstehend angesprochenen doppeltgespeisten Asynchronmaschine 18 wird das Generatormoment beispielsweise durch die Ansteuerung der Umrichter eingestellt. Das Generatormoment ist das elektrische erzeugte Gegenmoment zum mechanischen Moment des Rotors der Windenergieanlage, das an dem Generator zur Erzeugung von elektrischer Leistung anliegen muss. In dem in Fig. 2 dargestellten Beispiel liegt der Sollwert für das Generatormoment N*' an einem Regler eines Umrichters 30 an.

Der Virtual-Inertia-Betrieb verwendet eine an den Anschlussklemmen der Windenergieanlage gemessene Frequenz $f_{meas}$. Der gemessene Frequenzwert $f_{meas}$ stellt den Istwert dar und erlaubt eine Detektion einer Abweichung von dem Nennwert der Netzfrequenz. Bei einem Windpark mit mehreren zusammengeschlossenen Windenergieanlagen empfängt eine Parksteuerung die gemessene Frequenz und leitet die gemessene Frequenz ohne weitere Verarbeitung an alle angeschlossenen Windenergieanlagen weiter oder veranlasst einen entsprechenden Verfahrensablauf an der Windenergieanlage. Alternativ kann die Frequenz auch lokal für eine oder mehrere Anlagen gemessen werden, wodurch eine Laufzeitverzögerung und eine Kommunikationsaufwand im Windparkt vermieden wird.

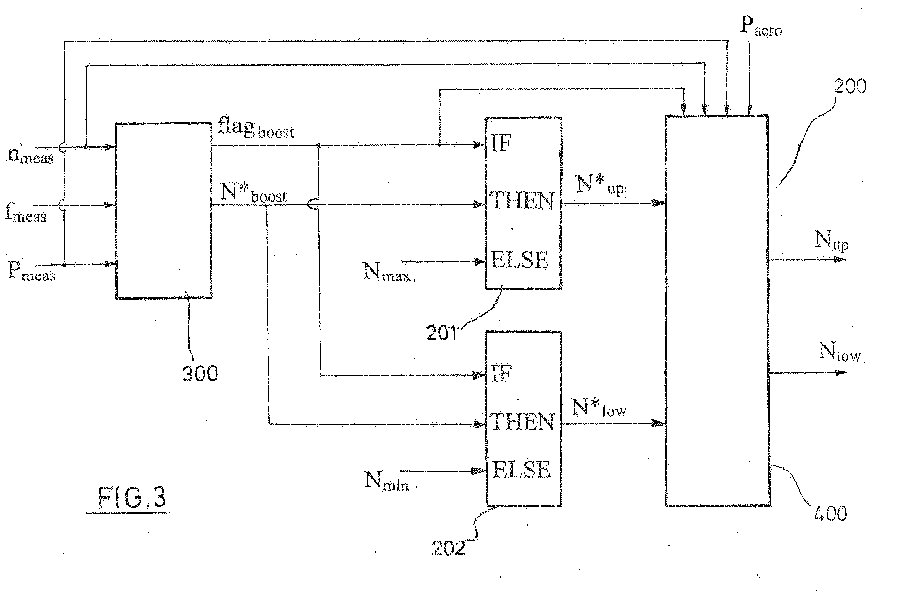

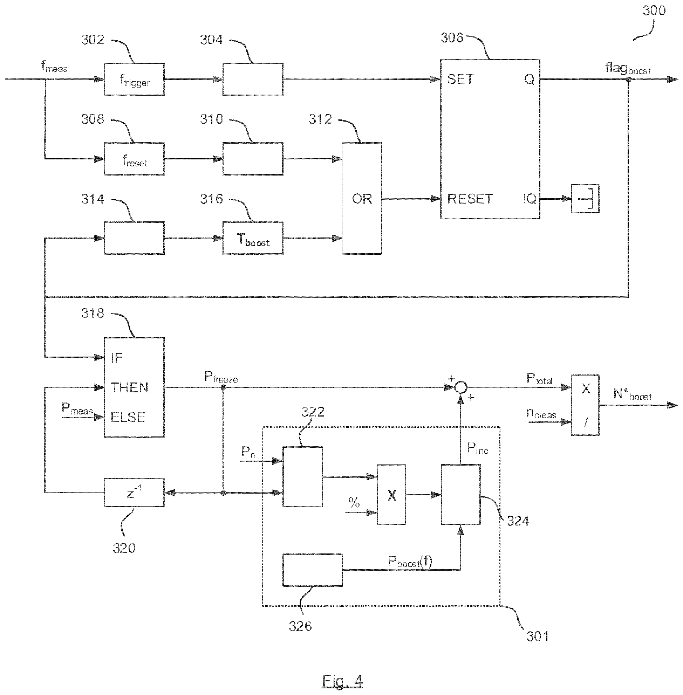

Die Frequenzmessung wird in der Steuerung der Windenergieanlage ausgewertet, um die Virtual-Inertia-Funktion auszulösen. Wenn die Frequenz unterhalb eine Auslösefrequenz $f_{trigger}$ als ersten vorbestimmten Frequenzwert fällt, dann wird die Virtual-Inertia-Funktion in der Begrenzersteuerung 200 aktiviert. Ist die Virtual-Inertia-Funktion aktiviert, wird ein entsprechendes Boost-Signal gesetzt und eine Reihe von Betriebszuständen durchlaufen: ein Boost-Betrieb und ein Wiederherstellungsbetrieb und ein eventuell zwischengeschalteter Übergangsbetrieb. Nachfolgend wird das Auslösen des Boost-Betriebs anhand der Fig. 3 und der Fig. 4 beschrieben.

Fig. 4 beschreibt die Erzeugung des Boost-Signals $flag_{boost}$ sowie des Sollwerts für das Generatormoment N*$_{boost}$. Eingangsgröße für die Erzeugung des Boost-Signals $flag_{boost}$ ist der Istwert der Frequenz $f_{meas}$ im elektrischen Versorgungsnetz. Die gewählte Darstellung zeigt das Boost-Signal als ein Flag-Bit dargestellt, das auch durch eine Zustandsmaschine oder in anderer Weise dargestellt werden könnte. In Schritt 302 wird der Istwert der Frequenz mit einem ersten vorbestimmten Frequenzwert für die Auslösefrequenz $f_{trigger}$ verglichen. Wenn der Istwert kleiner als der erste vorbestimmte Frequenzwert ist, wird der Ausgang der entsprechenden Erkennungsschaltung 304 auf 1 gesetzt. Das Ausgangssignal der Erkennungsschaltung 304 liegt am SET-Eingang eines Flipflops 306 ein, so dass mit dem Erkennen einer Unterfrequenz an dessen Q-Ausgang das Boost-Signal $flag_{boost}$ ausgegeben wird. Ist der Istwert der Frequenz bei einem Vergleich 308 größer als ein zweiter vorbestimmter Frequenzwert für eine Rücksetzfrequenz $f_{reset}$, wird dies in der Erkennungsschaltung 310 erkannt und durch die Erkennungsschaltung 310 ein entsprechender 1-Wert am Eingang der Oder-Schaltung 312 angelegt. Am weiteren Eingang der Oder-Schaltung 312 liegt der Ausgang eines Komparators 316 an, der einen 1-Wert ausgibt, wenn das Boost-Signal $flag_{boost}$ für eine Boostdauer $T_{boost}$ an dem Komperator anliegt. Die Boostdauer wird über ein Zeitglied 314 erfasst. Weitere Bedingungen für die Oder-Schaltung 312 werden nachfolgend beschrieben. Der Ausgang der Oder-Schaltung 312 liegt an dem RESET-Eingang des Flipflops 306 an, der dazu dient, den Q-Ausgang auf null zu setzen, so dass das Boost-Signals $flag_{boost}$ nicht länger ausgegeben wird .

Das Boost-Signal $flag_{boost}$ liegt, soweit durch den Flipflops 306 erzeugt, an einer Wenn-Dann-Verzweigung 318 an. Wenn das Boost-Signal $flag_{boost}$ an der Wenn-Dann-Verzweigung 318 anliegt, gibt diese an ihrem Ausgang eine festgehaltene elektrische Leistung $P_{freeze}$ aus. Die festgehaltene Leistung $P_{freeze}$ ist über ein Zeitglied 320 rückgekoppelt. Mit der festgehaltenen Leistung $P_{freeze}$ wird der Istwert der elektrischen Leistung vor Auftreten des Boost-Signals festgehalten und als Basis für die Steuerung während des Boost-Betriebs verwendet. Liegt das Boost-Signal $flag_{boost}$ nicht oder nicht mehr an der Wenn-Dann-Verzweigung 318 an, ist die Wenn-Dann-Verzweigung 318 eingerichtet, einen anliegenden Istwert der von der Windenergieanlage aktuell abgegeben elektrischen Leistung $P_{meas}$ als Sonst-Wert auszugeben.

In einem zusätzlichen Block 301 wird eine zusätzlich bereitzustellende Leistung $P_{inc}$ bestimmt. Zur Bestimmung der Leistung $P_{inc}$ können verschiedene Ansätze gewählt werden, die sich mit den Auswahlelementen 322 und 324 auswählen lassen. In einem Ansatz wird die Nennleistung $P_n$ zugrunde gelegt. In einer alternativen Ausgestaltung kann die festgehaltene Leistung $P_{freeze}$ zur Basis genommen werden. Beide Größen liegen an Auswahlelement 322 an, das eingerichtet ist, je nachdem, welches Verfahren ausgewählt ist, eine der Größen auf ein Multiplikationsglied aufzuschalten. Das Multiplikationsglied ist eingerichtet, den aufgeschalteten Leistungswert mit einem Prozentwert zu skalieren, , um die zusätzlich bereitzustellende Leistung $P_{inc}$ zu ermitteln. Der Prozentwert kann durch ein weiteres Schaltelement (nicht gezeigt), z.B. in Abhängigkeit von der gemessenen Netzfrequenz $f_{meas}$ ermittelt sein. Alternativ ist es auch möglich, einen frequenzabhängigen Leistungswert $P_{boost}(f)$ durch ein Berechnungselement 326 zu ermitteln. In dem dargestellten Ausführungsbeispiel erlaubt ein Auswahlelement 324 die Auswahl, welche der ermittelten Leistungswerte als $P_{inc}$ aus dem Block 301 ausgegeben wird. Es ist jedoch auch möglich, lediglich eine der Varianten vorzusehen und die für ein Windparkprojekt präferierte Lösung in der Software zu parametrieren.. Festgehaltene Leistung $P_{freeze}$ und zusätzliche Leistung $P_{inc}$ werden mittels eines Additionsgliedes zu einem aggregierten Leistungssollwert $P_{total}$ addiert und mittels eines Divisionsgliedes durch den aktuellen Istwert der Drehzahl $n_{meas}$ dividiert, um den Sollwert für das Generatormoment $N^*_{boost}$ zu bestimmen.

Zusammenfassend kann zu dem Ablauf in Fig. 4 festgehalten werden, dass, wenn die Frequenz unterhalb des Frequenzwerts $f_{trigger}$ detektiert wird, ein Boost-Signal $flag_{boost}$ für eine vorgebbare Boostdauer $T_{boost}$ generiert wird. Durch die Verwendung einer zweiten vorbestimmten Frequenz $f_{reset}$, kann der Boost-Modus vorzeitig verlassen werden, wenn die Netzfrequenz in ihren normalen Bereich zurückkehrt. Weitere mögliche Bedingungen für ein vorzeitiges Verlassen des Boost-Betriebs können beispielsweise ein Erreichen einer minimalen Generatordrehzahl sein, unterhalb derer die Windenergieanlage nicht dauerhaft betrieben werden kann. Durch ein Zurücksetzen des Boost-Signals $flag_{boost}$ bei Erreichen der minimalen Generatordrehzahl kann ein Abschalten der Windenergieanlage als Ergebnis des Boost-Betriebs vermieden werden. Ebenso kann für den Generator eine minimale Geschwindigkeit oder eine maximale Drehzahlabsenkung definiert sein, um einen Stall-Betrieb und ein Herunterfahren der Windenergieanlage zu vermeiden. Entsprechende Eingangswerte können dafür zusätzlich an die Oder-Schaltung 312 angelegt werden, so dass der Boost-Betrieb beim Anliegen entsprechender Signale vorzeitig beendet und das Boost-Signal $flag_{boost}$ zurückgesetzt wird.

Die gemäß dem Ausführungsbeispiel nach Fig. 4 ermittelten Signale werden gemäß dem Blockschaltbild aus Fig. 3 zur Bestimmung der oberen Grenze $N_{up}$ und der unteren Grenze $N_{low}$ für den Begrenzer 102 verwendet. Fig. 3 stellt die Begrenzersteuerung 200 dar. Zur Bestimmung der oberen und unteren Grenze für den Begrenzer 102 liegen in Fig. 3 der Istwert der Drehzahl $n_{meas}$, der Istwert der Frequenz $f_{meas}$ und der Istwert der eingespeisten elektrischen Leistung $P_{meas}$ an dem Block 300 ein. Der Block 300 besitzt den in Bezug auf Fig. 4 erläuterten Aufbau.

Ausgangsgrößen von Block 300 sind das Boost-Signal $flag_{boost}$ und der Sollwert für das Drehmoment $N^*_{boost}$ im Boost-Betrieb. Beide Signale liegen jeweils an einer Wenn-Dann-Verzweigung 201 bzw. 202 an und werden von den Verzweigungen gegen die Wenn-Bedingung geprüft. Zudem liegen als "Sonst"-Alternativen die für den Normalbetrieb vorgesehenen Werte für das maximale Drehmoment $N_{max}$ bzw. das minimale Drehmoment $N_{min}$ an den Verzweigung 201 bzw. 202 an. Ist das Boost-Signal $flag_{boost}$ gesetzt, so wird $N^*_{boost}$ als obere Grenze $N^*_{up}$ 203 und als untere Grenze $N^*_{low}$ 204 ausgegeben. Liegt kein Boost-Signal $flag_{boost}$ vor, so wird der Wert $N_{max}$ als obere Grenze $N^*_{up}$ und $N_{min}$ als untere Grenze $N^*_{low}$ für den Begrenzer gesetzt.

Die durch die Wenn-Dann- Verzweigungen ermittelten oberen und unteren Grenzen liegen an einem einheitlichen Steuerblock 400 an. Der einheitliche Steuerblock 400 besitzt als weitere Eingangssignale auch das Boost-Signal sowie den Istwert der Drehzahl $n_{meas}$ und den Istwert der eingespeisten elektrischen Leistung $P_{meas}$. Hinzu kommt der Wert der aktuell aus dem den Rotor der Windenergieanlage anströmenden Wind zur Verfügung stehenden Leistung $P_{aero}$. In dem einheitlichen Steuerblock 400 werden aus den anliegenden Sollwerten für die obere Grenze $N^*_{up}$ und die untere $N^*_{low}$ die obere und untere Grenzen $N_{low}$ und $N_{up}$ für den Begrenzer 102 berechnet. Der einheitliche Steuerblock 400 ist eingerichtet, das Drehmoment der Windenergieanlage in Abhängigkeit der anliegenden Eingangsgrößen in jedem Betriebszustand, der beim Ausführen einer Virtual-Inertia-Funktion auftreten kann, zu steuern.

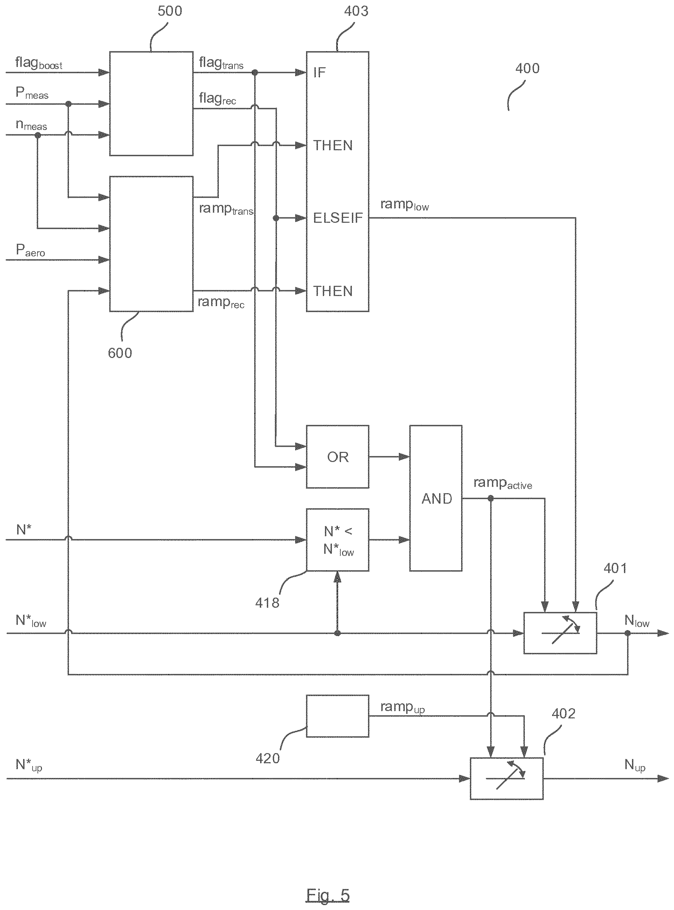

Die Funktionsweise des einheitlichen Steuerblocks 400 wird anhand der Fig. 5 näher beschrieben. Die Umwandlung der Sollwerte $N^*_{low}$ und $N^*_{up}$ in Steuergrößen $N_{low}$ und $N_{up}$ erfolgt über Rampenfunktionen 401, 402. Die Rampenfunktionen werden über ein Rampensignal $ramp_{active}$ aktiv geschaltet. Das Aktivschalten der Rampenfunktion erfolgt, wenn entweder das Übergangs signal $flag_{trans}$ oder das Wiederherstellungssignal $flag_{rec}$ durch den Umschaltblock 500 gesetzt ist. Zudem muss der aus der Drehzahlregelung gewonnene Sollwert $N^*$ für das Generatormoment an dem Komparator 418 kleiner sein als der Sollwert für die untere Drehmomentgrenze $N^*_{low}$. Nicht dargestellt in Fig. 5 ist die weitere Alternative, dass ein zweiter Komparator vorgesehen ist, der zusätzlich prüft, ob der Sollwert für das Generatormoment $N^*$ eventuell auch größer als der Sollwert für die obere Grenze $N^*_{up}$ ist. Auf jeden Fall ist notwendige Voraussetzung für das Aktivieren der Rampenfunktionen 401 und 402, dass der Sollwert $N^*$ für das Generatormoment sich außerhalb der durch die Sollwerte für das Generatormoment $N^*_{low}$ und $N^*_{up}$ befindet.

Sind die Rampenfunktionen aktiv geschaltet, so liegt an der Rampenfunktion 401 die Rampe $ramp_{low}$ für die untere Grenze am Begrenzer und an der Rampenfunktion 402 die Rampe $ramp_{up}$ für die obere Grenze am Begrenzer an. Bei den Rampen handelt es sich um maximal zulässige zeitliche Änderungen für das Generatormoment. Für die Rampenfunktion 402 sind konstante Werte die Rampe $ramp_{up}$ in einem Speicherblock 420 vorgegeben.

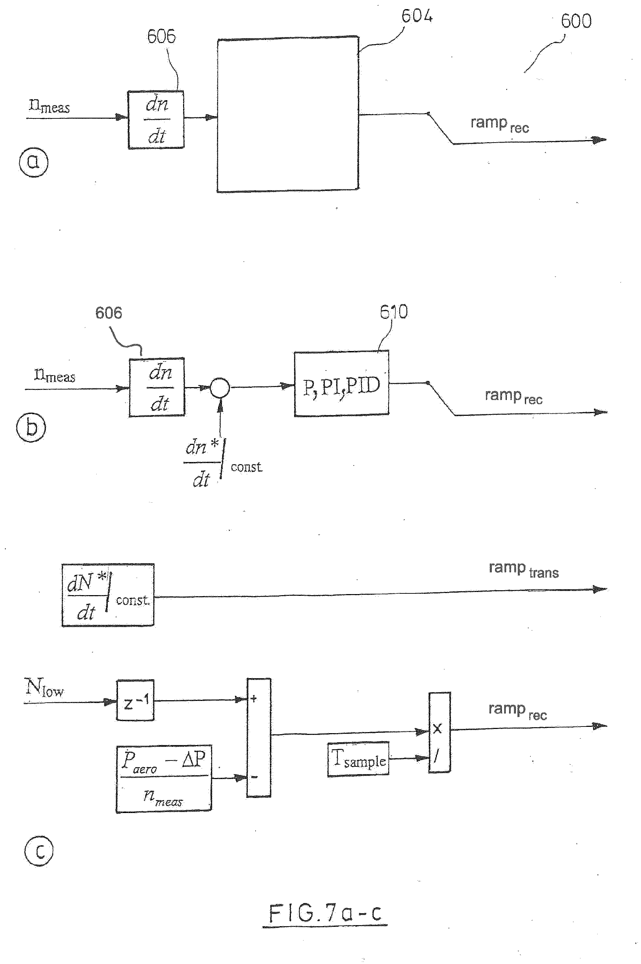

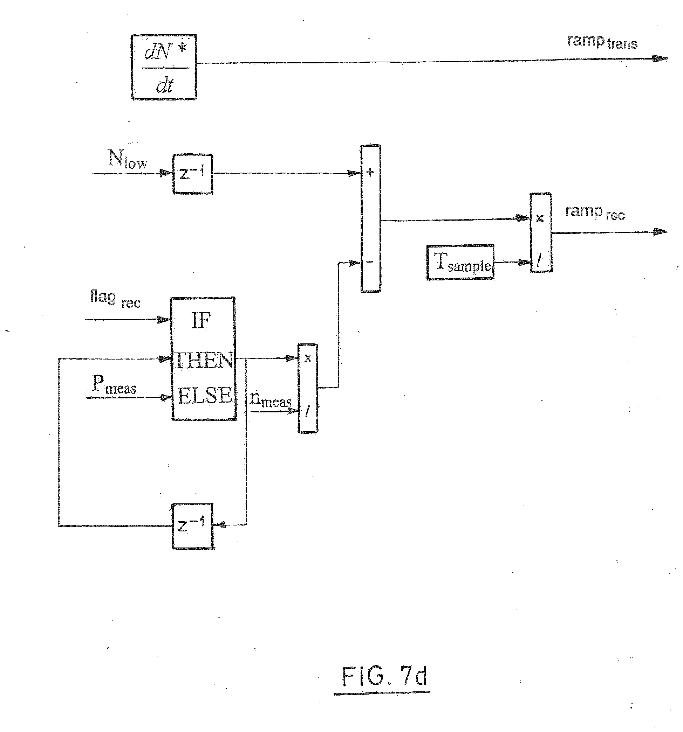

Die Berechnung der Rampenfunktionen erfolgt in Block 600. Fig. 7 zeigt vier Ausführungsbeispiele für die Berechnungen der Rampen in Block 600. Bei der Berechnung der Rampenfunktionen ist zu unterscheiden, ob nach der Beendigung des Boost-Betriebs ein Übergangsbetrieb für die Windenergieanlage vorgesehen ist oder ob die Betriebsführung direkt in den Wiederherstellungsbetrieb wechselt. Fign. 7a und 7b betreffen eine Betriebsführung, bei der die Windenergieanlage direkt in den Wiederherstellungsmodus wechselt, während Fign. 7c und 7d noch einen zwischengeschalteten Übergangsbereich kennzeichnen. Die Steuersignale $ramp_{rec}$ und $ramp_{trans}$ entsprechen Sollgrößen für das Generatormoment.

Fig. 7a zeigt die Bestimmung eines Ansteuersignals ramp$_{rec}$ für die Rampenfunktion. Das Ansteuersignal ramp$_{rec}$ wird beispielsweise aus einer Look-Up-Tabelle gewonnen, in der die zeitliche Änderung des Generatormoments über der Änderung der Drehzahl aufgetragen ist. Die Änderung der Drehzahl wird aus dem Istwert der Drehzahl n$_{meas}$ über ein Differenzierglied 606 bestimmt. In der Look-Up-Tabelle 604 wird das Verhältnis zwischen der aus dem Wind entnehmbaren Leistung P$_{aero}$ und der eingespeisten elektrischen Leistung P$_{meas}$ hergestellt. In der Look-Up-Tabelle ist zu berücksichtigen, dass durch eine steigende Drehzahl die Rotationsenergie in der Windenergieanlage zunimmt, während bei abnehmendem Generatormoment N auch die eingespeiste elektrische Leistung P$_{el}$ abnimmt. Über das Steuersignal ramp$_{rec}$ wird die maximal zulässige Änderung des Generatormoments begrenzt. Bei einer Anwendung auf die Rampenfunktionen kann ramp$_{rec}$ sowohl als ramp$_{low}$ an die Rampenfunktion 401 und als ramp$_{up}$ an die Rampenfunktion 402 angelegt werden.

Fig. 7b zeigt eine alternative Ausgestaltung, bei der zu der zeitlichen Ableitung des Istwertes der Drehzahl ein konstanter Änderungsterm $\frac{dn*}{dt}/_{const}$ addiert wird. Die auf diese Art und Weise überhöhte Drehzahländerung wird über einen Regler 610 ausgeregelt. Der Regler 610 weist ein Proportionalglied auf und kann als P-, PI- oder PID-Regler ausgelegt sein. Ausgangsgröße des Reglers 610 ist das Steuersignal ramp$_{rec}$ für die Ansteuerung der Rampenfunktion 401 und 402.

Fig. 7c zeigt ein Beispiel zur Berechnung der Steuersignale ramp$_{trans}$ und ramp$_{rec}$ für die Rampenfunktionen, wenn nach dem Boost-Betrieb zwischen dem Übergangsbetrieb und dem Wiederherstellungsbetrieb unterschieden wird. Während des Übergangsbetriebs wird ein konstanter Wert $\frac{dN*}{dt}/_{const}$ für die maximal zulässige Änderung des Generatormoments vorgegeben und als Steuersignal ramp$_{trans}$ verwendet. Diese Vorgabe ist für den Übergangsbereich zeitlich konstant. Wird nach dem Übergangsbetrieb in den Wiederherstellungsbetrieb umgeschaltet, so wird, ausgehend von der zuvor vorliegenden unteren Grenze N$_{low}$, die mittels eines Zeitgliedes z$^{-1}$ um einen Zeitschritt zurückversetzt wird, durch ein Differenzglied eine Quotientengröße subtrahiert. Die Quotientengröße setzt sich zusammen aus dem Quotienten, der aus der Differenz von aus dem Wind verfügbarer Leistung P$_{aero}$ und einer vorgegebenen Leistungsdifferenz ΔP gebildet ist. Der Nenner des Quotienten wird durch den Istwert der Drehzahl gebildet. Die Leistung dividiert durch die Drehzahl entspricht einem Drehmoment, wobei der Quotient interpretiert werden kann als ein Drehmoment, das vorgegeben werden soll, um eine konstante Leistungsdifferenz ΔP unterhalb der verfügbaren Leistung P$_{aero}$ einzustellen. Um diese Größe wird das vorliegende Generatormoment reduziert. Die Differenz wird mittels eines Divisionsglieds durch eine vorgegebene Zeitspanne T$_{sample}$ dividiert, um so eine maximal zulässige Drehmomentänderung als Steuersignal ramp$_{rec}$ für die Rampenfunktion zu erhalten. Kerngedanke im Wiederherstellungsbetrieb ist, dass die Leistungsdifferenz ΔP nicht mehr aus dem Wind entnommen wird, um so die Rotationsenergie der Windenergieanlage zu erhöhen.

Eine weitere Ausgestaltung wird in Fig. 7d erläutert. Auch hier ist das Steuersignal 602 für die Rampenfunktion während des Übergangsbetriebs auf einen konstanten Wert $\frac{dN*}{dt}/_{const}$ gesetzt. Im Wiederherstellungsbetrieb wird das Steuersignal ramp$_{rec}$ mit einem ähnlichen Ansatz wie in Fig. 7c berechnet. Jedoch wird das an dem Differenzglied anliegende zu subtrahierende Moment nicht mit Hilfe einer fest vorgegebenen Differenzleistung bestimmt, sondern ausgehend von dem Leistungsistwert P$_{meas}$ und dem Istwert für die Drehzahl. Der Leistungsistwert wird solange das Wiederherstellungssignal flag$_{rec}$ an einer Wenn-Dann-Verzweigung anliegt, über ein Zeitglied z$^{-1}$ konstant gehalten, also auf dem Wert gehalten, bevor in den Wiederherstellungsbetrieb gewechselt wurde. Für die Drehzahl n$_{meas}$ wird der aktuelle Istwert gewählt, die zusammen mit dem Leistungswert an einem Divisionsglied anliegt. Kerngedanke bei dieser Ausgestaltung ist, dass durch das Festhalten des Leistungswerts eine entsprechend dem Istwert der Leistung bei Eintritt des Wiederherstellungsbetriebs proportionale Korrektur des Generatormoments erfolgt.

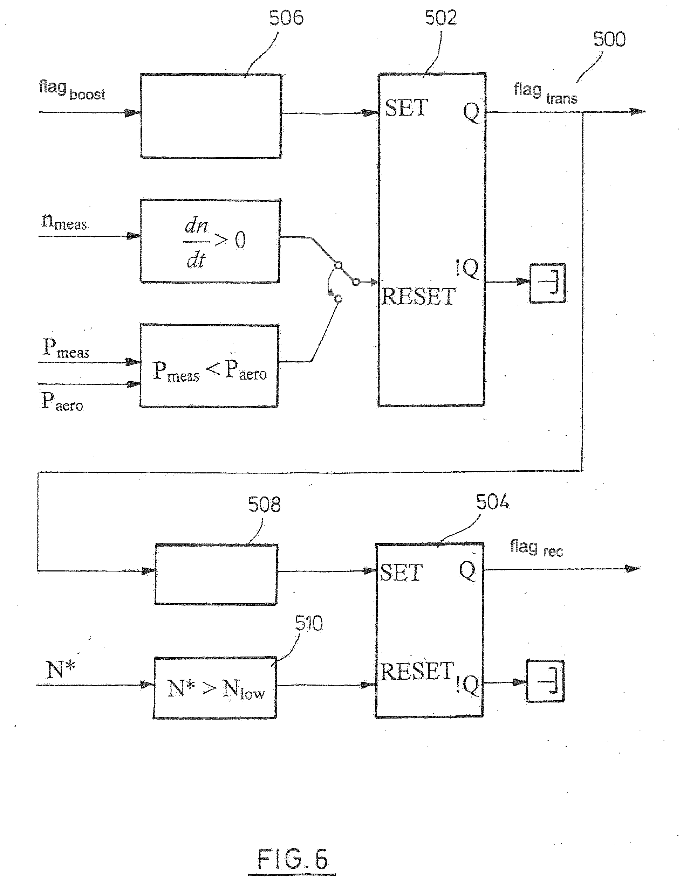

Bezogen auf den einheitlichen Steuerblock 400 bedeutet dies, dass, wenn in der Wenn-Dann-Verzweigung 403 das Übergangs signal flag$_{trans}$ anliegt, das Steuersignal ramp$_{low}$ für die Rampenfunktion 401 dem berechneten Steuersignal ramp$_{trans}$ entspricht. Liegt dagegen das Wiederherstellungssignal flag$_{rec}$ an der Wenn-Dann-Verzweigung 403 an, so ist das Steuersignal ramp$_{low}$ für die Rampenfunktion 401 durch das Steuersignal 616 ramp$_{rec}$ vorgegeben. Das Umschalten von dem Boost-Signal (flag$_{boost}$) zu dem Übergangs signal (flag$_{trans}$) oder dem Wiederherstellungssignal (flag$_{rec}$) ist in dem Umschaltblock 500 in Fig. 5 dargestellt. Ein möglicher näherer Aufbau für den Umschaltblock 500 findet sich in Fig. 6.

Zentrale Elemente für das Umschalten sind zwei Flipflop-Schaltungen 502, 504. An dem SET-Eingang der Flipflop-Schaltung 502 liegt das Boost-Signal flag$_{boost}$ an, das über eine Erkennungsschaltung 506 bei einem Heruntersetzen des Boost-Signals vom Zustand Ein auf den Zustand. Aus ein Eingangssignal an den SET-Eingang des Flipflops anlegt und damit ein Übergangssignal flag$_{trans}$ an dem Q-Ausgang der Flipflop-Schaltung 502 erzeugt. Die Endbedingung für den Übergangsbereich wird durch Setzen an dem RESET-Eingang des Flipflops 502 erzielt. Entweder kann für eine Beendigung des Übergangsbereichs darauf abgestellt werden, dass die Drehzahländerung positiv ist. Dies bedeutet, die Drehzahl nimmt wieder zu, so dass das Übergangssignal flag$_{trans}$ zurückgesetzt werden kann. Alternativ zu einer Drehzahlzunahme kann auch ein Signal an den RESET-Eingang der Flipflop-Schaltung angelegt werden, wenn die gemessene Leistung P$_{meas}$ kleiner als die aktuell aus dem Wind verfügbare Leistung P$_{aero}$ ist.

In beiden Fällen wird der Übergangsbereich beendet und das Übergangssignal flag$_{trans}$ heruntergesetzt. Ansprechend auf das Heruntersetzen des Übergangssignals flag$_{trans}$ legt die Detektionseinheit 508 ein Signal an den SET-Eingang der Flipflop-Schaltung 504 an. Entsprechend wird am Q-Ausgang das Wiederherstellungssignal flag$_{rec}$ gesetzt. Der Wiederherstellungsbetrieb hält dann an, bis am RESET-Eingang der Flipflop-Schaltung 504 das Ausgangssignal des Komparators 510 anliegt, das anzeigt, wenn der Sollwert für das Generatormoment N* größer als die untere Grenze N$_{low}$ am Begrenzer ist. Zusätzlich kann ein weiterer Komparator (nicht gezeigt) vorgesehen sein, der vergleicht, ob der Sollwert N* kleiner als der obere Grenzwert N$_{up}$ an dem Begrenzer ist.

Die Funktionalität des Übergangsbetriebs und des Wiederherstellungsbetriebs kann wie folgt zusammengefasst werden. Ein Signal für den Übergangsbetrieb wird gesetzt, sobald detektiert wird, dass der Boost-Betrieb deaktiviert wurde und das Signal für den Betrieb zur Virtual Inertia gesetzt ist. Der Übergangsbetrieb kann deaktiviert werden, wenn eine der beiden Bedingungen aus Fig. 6, die an dem RESET-Eingang der Flipflop-Schaltung 502 anliegen, erfüllt ist. Wenn die Drehzahl größer als ein vorgebbarer kleiner positiver Wert ist und groß genug ist, um Geschwindigkeitsoszillationen in dem Generator auszulösen. Die zweite Bedingung betrifft den Istwert der eingespeisten elektrischen Leistung, beispielsweise in Form der Wirkleistung, gegenüber der geschätzten, durch den Wind zur Verfügung gestellten aerodynamischen Leistung P$_{aero}$. Ein vorgebbarer Unterschied in der Leistung basiert auf den Verlusten zwischen aerodynamischer Leistung und eingespeister Leistung und sollte groß genug sein, um ein Auslösen von Oszillationen in der geschätzten aerodynamischen Leistung oder in der Wirkleistungsausgabe zu verhindern.

Ist der Übergangsbetrieb beendet, so wird der Wiederherstellungsbetrieb eingeleitet. Der Wiederherstellungsbetrieb ist solange zugeschaltet, solange der Drehmomentsollwert für den normalen Betrieb durch die untere Grenze des Begrenzers begrenzt ist (vgl. Komparator 510). Ein Deaktivieren des Wiederherstellungsbetriebs zeigt an, dass die Windenergieanlage wieder in ihren normalen Betrieb zurückkehrt.

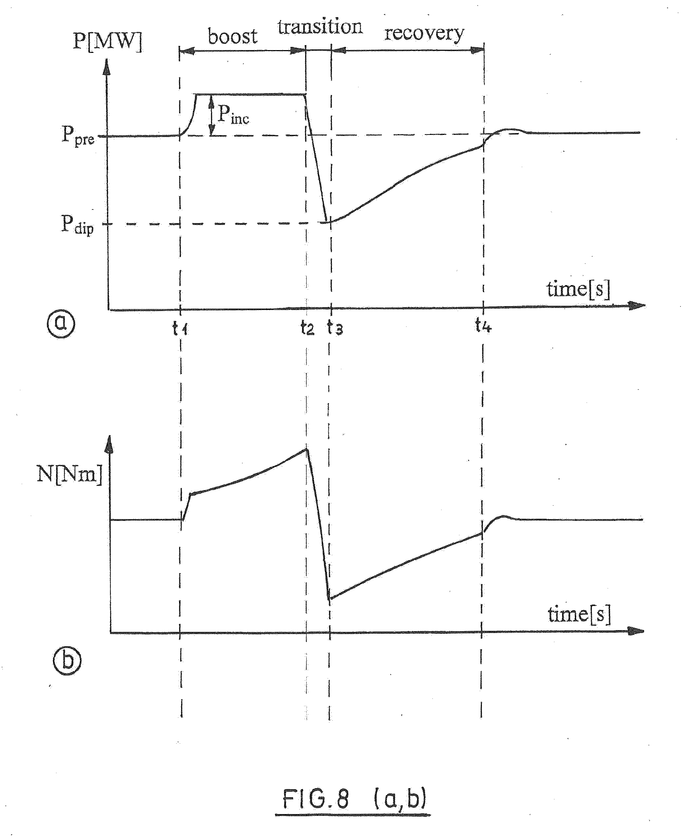

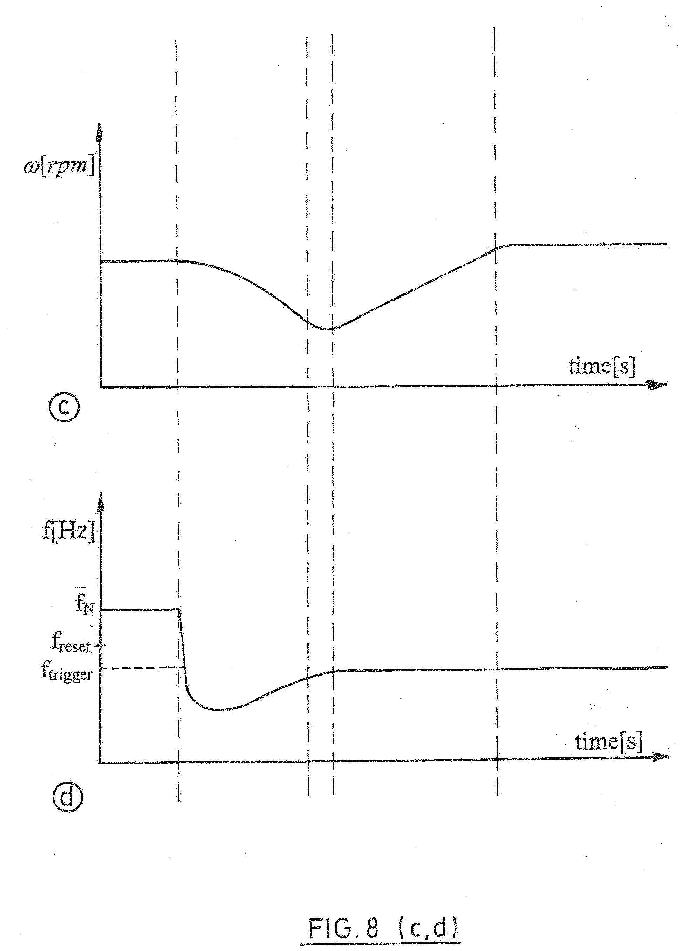

Fig. 8 zeigt über der Zeit den qualitativen Verlauf von Wirkleistung P, Generatormoment N, Drehzahl ω und Frequenz f im elektrischen Versorgungsnetz. Ausgelöst wird der Boost-Betrieb zum Zeitpunkt t$_1$, in dem die Netzfrequenz f unter einen Wert f$_{trigger}$ fällt. Im Zeitpunkt t$_1$ wird der Boost-Betrieb ausgelöst. Nach einem kurzen Anstieg der eingespeisten Wirkleistung und des Generatormoments N erreicht die eingespeiste Leistung einen konstanten Wert, der um P$_{inc}$ höher als der zuvor eingespeiste Leistungswert P$_{pre}$ vor dem Auftreten des Frequenzeinbruchs ist. In dem Boost-Betrieb steigt das Generatormoment N an und die Drehzahl ω nimmt ab.

Nach der vorbestimmten Zeitdauer für die erhöhte Leistungseinspeisung T$_{boost}$ ist der Zeitpunkt t$_2$ erreicht und es erfolgt der Übergangsbereich. Der Übergangsbereich ist dadurch gekennzeichnet, dass das Generatormoment mit konstanter Steigung zwischen der Zeitspanne t$_2$ und t$_3$ abnimmt. In dieser Zeitspanne stabilisiert sich die Drehzahl. Der Übergangsbereich wird beendet, wenn eine untere Leistungsgrenze P$_{dip}$ erreicht ist. Auf die Art und Weise wird sichergestellt, dass die Leistung an der Windenergieanlage nicht zu stark abfällt und es zu einem Herunterfahren der Windenergieanlage kommt. Nach Beendigung des Übergangsbetriebs beginnt der Wiederherstellungsbetrieb im Zeitpunkt t$_3$. Im Wiederherstellungsbetrieb nehmen sowohl Drehmoment als auch Drehzahl zu, bis der Wiederherstellungsbetrieb beendet ist. Zum Abschluss des Wiederherstellungsbetriebs entspricht die eingespeiste elektrische Leistung der vor dem Frequenzabfall eingespeisten elektrischen Leistung.

Bezugszeichenliste

| | |
|---|---|
| 10 | Windenergieanlage |
| 11 | Turm |
| 12 | Gondel |
| 14 | Rotor |
| 16 | Rotorblätter |
| 18 | Asynchrongenerator |
| 20 | Umrichter |
| 24 | Transformator |
| 25 | elektrisches Übertragungsnetz |
| 26 | Regelung |
| 27 | Windparkregelung |
| 28 | PT-Glied |
| 102 | Begrenzer |
| 200 | Begrenzersteuerung |
| 201 | Wenn-Dann-Verzweigung |
| 202 | Wenn-Dann-Verzweigung |
| 300 | Block |
| 301 | zusätzlicher Block |
| 302 | Komparator |
| 304 | Erkennungsschaltung |
| 306 | Flipflop |
| 308 | Komparator |
| 310 | Erkennungsschaltung |
| 312 | Oder-Schaltung |
| 314 | Zeitglied |
| 316 | Komparator |
| 318 | Wenn-Dann-Verzweigung |
| 320 | Zeitglied |

| | |
|---|---|
| 322 | Auswahlelement |
| 324 | Auswahlelement |
| 326 | Berechnungselement |
| 400 | einheitlicher Steuerblock |
| 401 | Rampenfunktion |
| 402 | Rampenfunktion |
| 403 | Wenn-Dann-Verzweigung |
| 418 | Komparator |
| 420 | Speicherblock |
| 500 | Umschaltblock |
| 502 | Flipflop-Schaltung |
| 504 | Flipflop-Schaltung |
| 506 | Erkennungsschaltung |
| 508 | Erkennungsschaltung |
| 510 | Komparator |
| 600 | Steuerblock |
| 604 | Look-Up-Tabelle |
| 606 | Differenzierglied |
| 610 | Regler |

$n^*$ Drehzahlsollwert

$n_{meas}$ Drehzahlistwert

$N^*$ Drehmomentsollwert

$N^{*'}$ begrenzter Drehmomentsollwert

$N^*_{boost}$ Sollwerts für das Generatormoment

$N_{iow}$ anliegende untere Grenze

$N_{up}$ anliegende obere Grenze

$N^*_{low}$ Sollwert für untere Grenze

$N^*_{up}$ Sollwert für obere Grenze

$N_{min}$ minimales Drehmoment

$N_{max}$ maximales Drehmoment

$f_{meas}$ gemessene Netzfrequenz

$f_{trigger}$ Auslösefrequenz

$f_{reset}$ Rücksetzfrequenz

$T_{boost}$ Boostdauer

$P_{aero}$ verfügbare Leistung

$P_{boost}(f)$ frequenzabhängig bestimmter Leistungswert

$P_{freeze}$ festgehaltene elektrische Leistung

$P_{inc}$ zusätzlich bereitzustellende Leistung

$P_{el}$ eingespeiste elektrische Leistung vor dem Auftreten des Frequenzeinbruchs

$P_{meas}$ gemessene elektrische Leistung

$P_n$ Nennleistung

$P_{total}$ aggregierter Leistungssollwert

$N^*_{boost}$ Sollwert für Generatormoment im Boost-Betrieb

$N_{max}$ maximales Drehmoment im Normalbetrieb

$N_{min}$ minimales Drehmoment im Normalbetrieb

$flag_{boost}$ Boost-Signal

$flag_{trans}$ Übergangssignal

$flag_{rec}$ Wiederherstellungssignal

$ramp_{low}$ Rampe für die untere Grenze

$ramp_{up}$ Rampe für die obere Grenze

$ramp_{rec}$ Steuersignal für Rampenfunktion im Wiederherstellungsbetrieb

$ramp_{trans}$ Steuersignal für Rampenfunktion im Übergangsbetrieb

$ramp_{active}$ Rampensignal

$$\frac{dn^*}{dt}/_{const}$$ konstante zeitliche Änderung der Drehzahl

$$\frac{dN^*}{dt}/_{const}$$ konstanter Wert für zeitliche Drehmomentänderung

$\Delta P$ konstante Leistungsdifferenz

$P_{dip}$ untere Leistungsgrenze

**Patentansprüche**

1. Verfahren zur Steuerung einer Windenergieanlage, die einen über einen Umrichter gesteuerten Generator aufweist, wobei in einem Boost-Betrieb eine in ein elektrisches Versorgungsnetz eingespeiste elektrische Leistung über eine generatorische Verzögerung des Generators erhöht wird, wobei die folgenden Verfahrensschritte vorgesehen sind:

   - Ermitteln eines Sollwerts für ein Generatormoment ($N^*$) abhängig von einem Istwert einer Drehzahl ($n_{meas}$), **gekennzeichnet durch**
   - Anlegen des ermittelten Sollwerts für das Generatormoment ($N^*$) über einen Begrenzer (102) mit vorgebbarer oberer und unterer Grenze ($N_{up}$, $N_{low}$) an den Umrichter,
   - Erzeugen eines Boost-Signals (flagboost), wenn die Frequenz im elektrischen Versorgungsnetz unter einen ersten vorbestimmten Frequenzwert (ftrigger) fällt und/oder wenn eine zeitliche Änderung der Frequenz im elektrischen Versorgungsnetz einen ersten vorbestimmten Gradientenwert übersteigt,
   - Ansprechend auf das Boost-Signal ($flag_{boost}$) bestimmen des Sollwerts für das Generatormoment ($N^*_{boost}$) im Boost-Betrieb, das gegenüber einem Ist-Wert der eingespeisten Leistung ($P_{freeze}$) zu einer erhöhten eingespeisten elektrischen Leistung ($P_{freeze} + P_{inc}$) führt, wobei der berechnete Sollwert für das Generatormoment ($N^*_{boost}$) im Boost-Betrieb sowohl als obere Grenze als auch als untere Grenze an den Begrenzer angelegt wird.

2. Verfahren nach Anspruch 1, **dadurch gekennzeichnet, dass** eine Vielzahl von unterschiedlichen Gradientenwerten vorgesehen sind, die jeweils eine Frequenzänderung im elektrischen Versorgungsnetz auf eine vorbestimmte Zeitdauer beziehen.

3. Verfahren nach einem der Ansprüche 1 oder 2, **dadurch gekennzeichnet, dass** das Boost-Signal ($flag_{boost}$) zurückgesetzt wird, wenn entweder eine vorbestimmte Zeitdauer ($T_{boost}$) seit Auftreten des Boost-Signals ($flag_{boost}$) verstrichen ist oder der Ist-Wert der Frequenz ($f_{meas}$) im elektrischen Versorgungsnetz größer als ein zweiter vorbestimmter Frequenzwert ($f_{reset}$) ist, der größer als der erste vorbestimmte Frequenzwert ($f_{trigger}$) ist.

4. Verfahren nach Anspruch 1 bis 3, **dadurch gekennzeichnet, dass** aus einer Leistung ($P_{freeze}$) bei Auftreten des Boost-Signals ($flag_{boost}$) und einer Boost-Leistung ($P_{boost}$) in Abhängigkeit von einem Istwert der Drehzahl ($n_{meas}$) der Sollwert für das Generatormoment ($N^*$) berechnet wird.

5. Verfahren nach Anspruch 4, **dadurch gekennzeichnet, dass** der Wert für die Boost-Leistung als ein vorbestimmter Bruchteil der Nennleistung ($P_N$) oder der Leistung ($P_{freeze}$) bei Auftreten des Boost-Signals berechnet wird.

6. Verfahren nach Anspruch 4, **dadurch gekennzeichnet, dass** der Wert für die Boost-Leistung ($P_{boost}$) abhängig von der gemessen Frequenz ($f_{meas}$) in dem elektrischen Versorgungsnetz berechnet wird.

7. Verfahren nach einem der Ansprüche 1 bis 6, **dadurch gekennzeichnet, dass** der Wert für die Boost-Leistung ($P_{boost}$) abhängig von der gemessenen Frequenzänderung pro Zeit in dem elektrischen Versorgungsnetz berechnet wird.

8. Verfahren nach Anspruch 1 bis 7, **dadurch gekennzeichnet, dass** bei Zurücksetzen des Boost-Signals ($flag_{boost}$) entweder ein Übergangssignal ($flag_{trans}$) oder ein Wiederherstellungssignal ($flag_{rec}$) erzeugt wird, wodurch folgende Verfahrensschritte ausgeführt werden:

- Ansprechend auf das Überganssignal ($flag_{trans}$) oder auf das Wiederherstellungssignal ($flag_{rec}$) Setzen der obere und der untere Grenze ($N_{up}$, $N_{low}$) an dem Begrenzer auf vorbestimmte Werte aus einem Normalbetrieb der Windenergieanlage, und
- Steuern der zeitlichen Änderung des Sollwerts für das Generatormoment ($dN^*/dt$) über eine Rampenfunktion.

9. Verfahren nach Anspruch 8, **dadurch gekennzeichnet, dass** bei dem Zurücksetzen des Boost-Signals ($flag_{boost}$) das Wiederherstellungssignal ($flag_{rec}$) erzeugt wird und die maximal zulässige zeitliche Änderung des Sollwert für das Generatormoment ($dN^*/dt$) abhängig von der zeitlichen Änderung der Drehzahl ($dn/dt$) bestimmt wird.

10. Verfahren nach einem der Ansprüche 8 oder 9, **dadurch gekennzeichnet, dass** bei dem Zurücksetzen des Boost-Signals ($flag_{boost}$) das Wiederherstellungssignal ($flag_{rec}$) erzeugt und die maximal zulässige zeitliche Änderung des Sollwerts für das Generatormoment ($dN^*/dt$) abhängig von der zeitlichen Änderung der Drehzahl über einen Regler mit einem P-Glied und/oder einem PI-Glied bestimmt wird, wobei der zeitlichen Änderung des Istwerts ($dn_{meas}/dt$) der Drehzahl ein konstanter Term ($dn^*/dt$) hinzuaddiert wird.

11. Verfahren nach einem der Ansprüche 8 bis 10, **dadurch gekennzeichnet, dass** bei dem Zurücksetzen des Boost-Signals ($flag_{boost}$) das Übergangssignal ($flag_{trans}$) erzeugt und die maximal zulässige zeitliche Änderung des Sollwerts für das Generatormoment ($dN^*/dt$) auf einen konstanten Wert gesetzt wird.

12. Verfahren nach Anspruch 11, **dadurch gekennzeichnet, dass** das Übergangssignal ($flag_{trans}$) zurückgesetzt und das Wiederherstellungssignal ($flag_{rec}$) gesetzt wird, wenn der Istwert der Drehzahl ($n_{meas}$) zunimmt und die eingespeiste Leistung ($P_{meas}$) kleiner als die verfügbare Leistung ($P_{aero}$) ist.

13. Verfahren nach Anspruch 12, **dadurch gekennzeichnet, dass** bei gesetztem Wiederherstellungssignal ($flag_{rec}$) die maximale zeitliche Änderung des Sollwerts des Generatormoments ($dN^*/dt$) abhängig von dem Istwert der Drehzahl ($n_{meas}$) und der verfügbaren Leistung ($P_{aero}$) bestimmt wird.

14. Verfahren nach Anspruch 12 oder 13, **dadurch gekennzeichnet, dass** bei gesetztem Wiederherstellungssignal ($flag_{rec}$) die maximale zeitliche Änderung des Sollwerts des Generatormoments ($dN^*/dt$) abhängig von einem Istwert der eingespeisten Leistung ($P_{meas}$) bei Auftreten des Wiederherstellungssignals und dem Istwert der Drehzahl ($n_{meas}$) bestimmt wird.

15. Verfahren nach einem der Ansprüche 12 bis 14, **dadurch gekennzeichnet, dass** das Wiederherstellungssignal ($flag_{rec}$) zurückgesetzt wird, wenn der Sollwert des Generatormoments ($N^*$) innerhalb eines durch die obere Grenze ($N_{up}$) und die untere Grenze ($N_{low}$) des Begrenzers vorgegebenen Bereichs liegt.

**Claims**

1. A method for controlling a wind turbine that has a generator that is controlled via a converter, wherein, in a boost operation, an electrical power that is fed into an electrical transmission network is increased via a generative deceleration of the generator, wherein the following method steps are provided:

- determining a set point value for a generator torque ($N^*$) depending on an actual value of a rotational speed ($n_{meas}$), **characterized by**
- applying the determined set point value for the generator torque ($N^*$) to the converter via a limiter (102) with a predefinable upper and lower limit ($N_{up}$, $N_{low}$),
- generating a boost signal ($flag_{boost}$) if the frequency in the electrical transmission network falls below a first predetermined frequency value ($f_{trigger}$) and/or if a temporal change of the frequency in the electrical transmission network exceeds a first predetermined gradient value,
- in response to the boost signal ($flag_{boost}$), determining the set point value for the generator torque ($N^*_{boost}$) in the boost operation that leads, compared to an actual value of the fed-in power ($P_{freeze}$), to an increased fed-in electrical power ($P_{freeze} + P_{inc}$), wherein the calculated set point value for the generator torque ($N^*_{boost}$) in the boost operation is applied to the limiter both as the upper limit and as the lower limit.

2. The method according to claim 1, **characterized in that** a plurality of different gradient values are provided that each relate a change in frequency in the electrical transmission network to a predetermined period of time.

3. The method according to one of claim 1 or 2, **characterized in that** the boost signal ($flag_{boost}$) is reset when either a predetermined period of time ($T_{boost}$) has elapsed since the boost signal ($flag_{boost}$) has occurred or the actual value of the frequency ($f_{meas}$) in the electrical transmission network is greater than a second predetermined frequency value ($f_{reset}$), which is greater than the first predetermined frequency value ($f_{trigger}$).

4. The method according to claim 1 to 3, **characterized in that** the set point value for the generator torque ($N^*$) is calculated from a power ($P_{freeze}$) when the boost signal ($flag_{boost}$) occurs and a boost power ($P_{boost}$) depending on an actual value of the rotational speed ($n_{meas}$).

5. The method according to claim 4, **characterized in that** the value for the boost power ($P_{boost}$) is calculated as a predetermined fraction of the rated power ($P_N$) or of the power ($P_{freeze}$) when the boost signal ($flag_{boost}$) occurs.

6. The method according to claim 4, **characterized in**
that the value for the boost power ($P_{boost}$) is calculated depending on the measured frequency ($f_{meas}$) in the electrical transmission network.

7. The method according to one of claims 1 to 6, **characterized in that** the value for the boost power ($P_{boost}$) is calculated depending on the measured change in frequency per time in the electrical transmission network.

8. The method according to claim 1 to 7, **characterized in that** either a transition signal ($flag_{trans}$) or a recovery signal ($flag_{rec}$) is generated when the boost signal ($flag_{boost}$) is reset, causing the following method steps to be executed:

- in response to the transition signal ($flag_{trans}$) or to the recovery signal ($flag_{rec}$), setting the upper and the lower limit ($N_{up}$, $N_{low}$) at the limiter to predetermined values from a normal operation of the wind turbine, and
- controlling the temporal change of the set point value for the generator torque ($dN^*/dt$) via a ramp function.

9. The method according to claim 8, **characterized in that**, when the boost signal ($flag_{boost}$) is reset, the recovery signal ($flag_{rec}$) is generated and the maximum permissible temporal change of the set point value for the generator torque ($dN^*/dt$) is determined depending on the temporal change of the rotational speed ($dn/dt$).

10. The method according to one of claims 8 or 9, **characterized in that**, when the boost signal ($flag_{boost}$) is reset, the recovery signal ($flag_{rec}$) is generated and the maximum permissible temporal change of the set point value for the generator torque ($dN^*/dt$) is determined depending on the temporal change of the rotational speed via a controller with a P element and/or a PI element, wherein a constant term ($dn^*/dt$) is added to the temporal change of the actual value ($dn_{meas}/dt$) of the rotational speed.

11. The method according to one of claims 8 to 10, **characterized in that**, when the boost signal ($flag_{boost}$) is reset, the transition signal ($flag_{trans}$) is generated and the maximum permissible temporal change of the set point value for the generator torque ($dN^*/dt$) is set to a constant value.

12. The method according to claim 11, **characterized in that** the transition signal ($flag_{trans}$) is reset and the recovery signal ($flag_{rec}$) is set when the actual value of the rotational speed ($n_{meas}$) increases and the power ($P_{meas}$) that is fed in is smaller than the available power ($P_{aero}$).

**13.** The method according to claim 12, **characterized in that**, with the recovery signal (flag$_{rec}$) set, the maximum temporal change of the set point value of the generator torque (dN*/dt) is determined depending on the actual value of the rotational speed (n$_{meas}$) and the available power (Paero).

**14.** The method according to claim 12 or 13, **characterized in that**, with the recovery signal (flag$_{rec}$) set, the maximum temporal change of the set point value of the generator torque (dN*/dt) is determined depending on an actual value of the power (P$_{meas}$) that is fed in when the recovery signal (flag$_{rec}$) occurs and on the actual value of the rotational speed (n$_{meas}$).

**15.** The method according to one of claims 12 to 14, **characterized in that** the recovery signal (flag$_{rec}$) is reset when the set point value of the generator torque (N*) is within a range specified by the upper limit (N$_{up}$) and the lower limit (N$_{low}$) of the limiter.

## Revendications

**1.** Procédé de commande d'une éolienne, qui présente un générateur commandé par le biais d'un convertisseur, dans lequel une puissance électrique injectée dans un réseau d'alimentation électrique est accrue dans un mode d'amplification (Boost) moyennant une temporisation du générateur, dans lequel les étapes suivantes sont prévues :

- la détermination d'une valeur de consigne applicable à un couple de générateur (N*) en fonction d'une valeur réelle d'une vitesse de rotation (n$_{meas}$), **caractérisé par**
- l'établissement de la valeur de consigne déterminée applicable au couple de générateur (N*) sur le convertisseur par le biais d'un limitateur (102) avec des limites supérieure et inférieure (N$_{up}$, N$_{low}$) pouvant être prédéfinies,
- la production d'un signal d'amplification (flag$_{boost}$) lorsque la fréquence tombe en dessous d'une première valeur de fréquence prédéfinie (f$_{trigger}$) dans le réseau d'alimentation électrique et/ou qu'une variation temporelle de la fréquence dépasse une première valeur de gradient prédéfinie dans le réseau d'alimentation électrique,
- la définition de la valeur de consigne applicable au couple de générateur (N*$_{boost}$) dans le mode Boost en réponse au signal d'amplification (flag$_{boost}$), lequel couple entraîne une puissance électrique injectée accrue (P$_{freeze}$ + P$_{inc}$) par rapport à une valeur réelle de la puissance injectée (Pfreeze), dans lequel la valeur de consigne calculée applicable au couple de générateur (N*$_{boost}$) dans le mode Boost est établie sur le limitateur tant comme limite supérieure que comme limite inférieure.

**2.** Procédé selon la revendication 1, **caractérisé en ce que** de multiples valeurs de gradient différentes sont prévues, qui mettent respectivement une variation de fréquence dans le réseau d'alimentation électrique en corrélation avec une durée prédéfinie.

**3.** Procédé selon l'une des revendications 1 ou 2, **caractérisé en ce que** le signal d'amplification (flag$_{boost}$) est réinitialisé lorsqu'une durée prédéfinie (T$_{boost}$) s'est écoulée depuis l'apparition du signal d'amplification (flag$_{boost}$) ou bien que la valeur réelle de la fréquence (f$_{meas}$) dans le réseau d'alimentation électrique est supérieure à une seconde valeur de fréquence prédéfinie (f$_{reset}$), qui est supérieure à la première valeur de fréquence prédéfinie (f$_{trigger}$).

**4.** Procédé selon la revendication 1 à 3, **caractérisé en ce que** la valeur de consigne applicable au couple de générateur (N*) est calculée en fonction d'une valeur réelle de la vitesse de rotation (n$_{meas}$) à partir d'une puissance (P$_{freeze}$) lors de l'apparition du signal d'amplification (flag$_{boost}$) et à partir d'une puissance d'amplification (P$_{boost}$).

**5.** Procédé selon la revendication 4, **caractérisé en ce que** la valeur applicable à la puissance d'amplification (P$_{boost}$) est calculée comme une fraction prédéfinie de la puissance nominale (P$_N$) ou de la puissance (P$_{freeze}$) lors de l'apparition du signal d'amplification (flag$_{boost}$).

**6.** Procédé selon la revendication 4, **caractérisé en ce que** la valeur applicable à la puissance d'amplification (P$_{boost}$) est calculée en fonction de la fréquence mesurée (f$_{meas}$) dans le réseau d'alimentation électrique.

**7.** Procédé selon l'une des revendications 1 à 6, **caractérisé en ce que** la valeur applicable à la puissance d'amplification (P$_{boost}$) est calculée en fonction de la variation de fréquence mesurée par rapport au temps dans le réseau d'alimentation électrique.

**8.** Procédé selon la revendication 1 à 7, **caractérisé en ce qu'**un signal de transition (flag$_{trans}$) ou bien un signal de rétablissement (flag$_{rec}$) est généré lors de la réinitialisation du signal d'amplification (flag$_{boost}$), moyennant quoi les étapes de procédé suivantes sont exécutées :

- le réglage de la limite supérieure et de la limite inférieure (N$_{up}$, N$_{low}$) au niveau du limitateur sur des valeurs prédéfinies à partir d'un fonctionnement normal de l'éolienne en réponse au signal

de transition (flag$_{trans}$) ou au signal de rétablissement (flag$_{rec}$), et

- la commande de la variation temporelle de la valeur de consigne applicable au couple de générateur (dN*/dt) par le biais d'une fonction rampe.

9. Procédé selon la revendication 8, **caractérisé en ce que** le signal de rétablissement (flag$_{rec}$) est généré lors de la réinitialisation du signal d'amplification (flag$_{boost}$) et que la variation temporelle maximale admissible de la valeur de consigne applicable au couple de générateur (dN*/dt) est définie en fonction de la variation temporelle de la vitesse de rotation (dn/dt).

10. Procédé selon l'une des revendications 8 ou 9, **caractérisé en ce que** le signal de rétablissement (flag$_{rec}$) est généré lors de la réinitialisation du signal d'amplification (flag$_{boost}$) et que la variation temporelle maximale admissible de la valeur de consigne applicable au couple de générateur (dN*/dt) est définie en fonction de la variation temporelle de la vitesse de rotation par le biais d'un régulateur doté d'un élément P (à *action proportionnelle)* et/ou d'un élément PI (à *action proportionnelle-intégrale),* dans lequel un terme constant (dn*/dt) est ajouté à la variation temporelle de la valeur réelle (dn$_{meas}$/dt) de la vitesse de rotation.

11. Procédé selon l'une des revendications 8 à 10, **caractérisé en ce que** le signal de transition (flag$_{trans}$) est généré lors de la réinitialisation du signal d'amplification (flag$_{boost}$) et que la variation temporelle maximale admissible de la valeur de consigne applicable au couple de générateur (dN*/dt) est réglée sur une valeur constante.

12. Procédé selon la revendication 11, **caractérisé en ce que** le signal de transition (flag$_{trans}$) est réinitialisé et le signal de rétablissement (flag$_{rec}$) est délivré lorsque la valeur réelle de la vitesse de rotation (n$_{meas}$) augmente et que la puissance injectée (P$_{meas}$) est inférieure à la puissance disponible (P$_{aero}$).

13. Procédé selon la revendication 12, **caractérisé en ce que** la variation temporelle maximale admissible de la valeur de consigne du couple de générateur (dN*/dt) est définie en fonction de la valeur réelle de la vitesse de rotation (n$_{meas}$) et de la puissance disponible (P$_{aero}$) lorsque le signal de rétablissement (flag$_{rec}$) est délivré.

14. Procédé selon la revendication 12 ou 13, **caractérisé en ce que** la variation temporelle maximale admissible de la valeur de consigne du couple de générateur (dN*/dt) est définie en fonction d'une valeur réelle de la puissance injectée (P$_{meas}$) lors de l'apparition du signal de rétablissement (flag$_{rec}$) et en fonction de la valeur réelle de la vitesse de rotation (n$_{meas}$).

15. Procédé selon l'une des revendications 12 à 14, **caractérisé en ce que** le signal de rétablissement (flag$_{rec}$) est réinitialisé lorsque la valeur de consigne du couple de générateur (N*) se situe à l'intérieur d'une plage prédéterminée par la limite supérieure (N$_{up}$) et la limite inférieure (N$_{low}$) du limitateur.

Fig. 1a

Fig. 1b

FIG.2

FIG.3

Fig. 4

Fig. 5

$$\underline{FIG.6}$$

$$\text{FIG.7a-c}$$

$$\frac{dN*}{dt}$$

ramp<sub>trans</sub>

$N_{low}$    $z^{-1}$    $+$

ramp<sub>rec</sub>

$T_{sample}$    $/$    $-$    $\times$

flag<sub>rec</sub>

IF THEN ELSE    $\times$

$P_{meas}$    $\dot{n}_{meas}$    $/$

$z^{-1}$

FIG. 7d

FIG.8 (a,b)

$\omega[rpm]$

time[s]

Ⓒ

f[Hz]

$\overline{f_N}$

$f_{reset}$

$f_{trigger}$

time[s]

ⓓ

FIG. 8 (c,d)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2532888 A1
- DE 102015208554 A1
- DE 102012224067 A1
- DE 2009014012 A1